# EUROPÄISCHE PATENTSCHRIFT

(11) **EP 3 567 289 B1**
(45) Veröffentlichungstag und Bekanntmachung des Hinweises auf die Patenterteilung: **03.11.2021**
(21) Anmeldenummer: 19173068.8
(22) Anmeldetag: 07.05.2019
(51) Int. Cl.: F16L 5/04, A62C 2/06, H02G 3/04

(54) **BRANDSCHUTZMANSCHETTE UND VERFAHREN ZU IHRER HERSTELLUNG**
FIRE SAFETY SLEEVE AND METHOD FOR ITS PRODUCTION
MANCHETTE DE PROTECTION CONTRE L'INCENDIE ET SON PROCÉDÉ DE FABRICATION

(30) Priorität: 07.05.2018 DE 102018110950
(43) Veröffentlichungstag der Anmeldung: 13.11.2019
(73) Patentinhaber: Rolf Kuhn GmbH, 21217 Seevetal (DE)
(72) Erfinder: Lutters, Andreas, 57080 Siegen (DE); Stütz, Christopher, 56291 Laudert (DE); Smolianov, Vladyslav, 57319 Bad Berleburg (DE)
(74) Vertreter: KASTEL Patentanwälte PartG mbB

(56) Entgegenhaltungen:
- EP-A1- 2 607 761
- DE-A1-102004 043 970
- DE-U1- 9 411 293
- US-A- 4 061 344

## Beschreibung

Die Erfindung betrifft eine außenliegend an einer Decke oder Wand befestigbare Brandschutzmanschette zum Abschotten von Kabel- oder Leitungsdurchführungen, mit einem Gehäuse, einer Befestigungseinrichtung und einer Brandschutzeinlage in dem Gehäuse, wobei die Brandschutzeinlage einen nachgiebig verformbaren Formkörper aus einem elastischen ersten Material mit intumeszierenden Eigenschaften aufweist.

Aus der DE 94 11 293 U1 ist eine Brandschutzvorrichtung für Lüftungsrohre bekannt, die einen Rohrstutzen mit einer stufenförmigen Querschnittserweiterung umfasst, so dass sich eine ringförmiger zum Rohrinneren offener Aufnahmeraum ergibt, wobei dieser Rorhstutzen an ein Lüftungsrohr anschließbar ist und in den Aufnahmeraum ein Ring aus einem bei Hitzeeinwirkung unter Volumenvergrößerung aufschäumenden und gleichzeitig wasserbeständigen Material eingesetzt ist, dessen Abmessungen so gewählt sind, dass der Außendurchmesser dem Durchmesser der Querschnittserweiterung entspricht und der Innenquerschnitt des Rings dem Querschnitt des querschnittsengeren Teils des Rohrstutzens entspricht. Der Rohrstutzen dient als Anschluss eines von einer Hauptleitung abzweigenden Lüftungsrohres. Dabei ist der querschnittsengere Teil in das Ende des Lüftungsrohres eingeführt und das andere Ende des Rohrstutzens ist an einer Abzweigöffnung der Hauptleitung befestigt.

Eine Brandschutzmanschette zum Abschotten von Kabeldurchführungen oder Leistungsdurchführungen, welche mit einem Gehäuse und einer Brandschutzeinlage in dem Gehäuse versehen ist, ist beispielsweise aus der DE 10 2004 055 928 A1 bekannt. Die Brandschutzeinlage ist hier aus mehreren Lagen eines Brandschutzbandes aus intumeszierenden Material gebildet, welches einerseits an einem Wandungsteil des Gehäuses befestigt ist und andererseits an Transportklappen befestigt ist, die im Brandfall durch aufschäumendes Material nach innen klappen, um weiteres aufschäumendes Material hierhin zu transportieren. Diese Brandschutzmanschette ist insbesondere für Kunststoffleitungen mit großem Durchmesser gedacht. Die Brandschutzeinlage ist somit durch dünne Streifen ausgebildet, die nur wenige Millimeter Dicke aufweisen und aufeinandergelegt sind. Für unterschiedliche Rohrdurchmesser oder Leitungsdurchmesser sind unterschiedliche Brandschutzmanschetten vorgesehen.

Um mit gleichen Durchmesser des Gehäuses eine höhere Flexibilität hinsichtlich der Durchmesser der abzuschottenden Leitungen oder Kabel zu erhalten und weiter eine Rauchgasdichtigkeit zu erhalten, schlägt die EP 2 607 761 B1 eine Brandschutzmanschette zum Abschotten von Kabel- oder Leitungsdurchführungen durch Wände oder Decken mit einer intumeszierenden Brandschutzeinlage vor, die an einem die Brandschutzeinlage umgebenden Wandungsteil eines Gehäuses an dessen Innenseite angeordnet ist. Dabei ist vorgesehen, dass die intumeszierende Brandschutzeinlage als ein den vom Wandungsteil umspannten Raum vollständig ausfüllender, nachgiebig verformbar Formkörper ausgebildet ist.

Bei der EP 2 607 761 B1 ist somit im Auslieferungsfall der gesamte Innenraum des Gehäuses, der von dem Wandungsteil umspannt wird, vollständig durch einen Formkörper ausgefüllt, der nachgiebig verformbar ausgebildet ist.

Der Formkörper ist als Vollzylinder ausgebildet. Zur Montage der aus der EP 2 607 761 B1 bekannten Brandschutzmanschette wird das Wandungsteil des Gehäuses entsprechend der Größe der Brandschutzeinlage gekürzt. Dann wird bei Montage der Brandschutzmanschette nach der Belegung der Wand- oder Deckendurchführung mit Leitungen oder Kabeln die Brandschutzeinlage eingeschnitten und gerade so viel Material der Brandschutzeinlage aus dem mittleren Bereich herausgeschnitten, dass sich die Brandschutzeinlage beim Anlegen der Manschette um die Leitungen oder Kabel mit einem leichten Druck an die Leitungen oder Kabel anpressen lassen. Hierdurch soll die Rauchgasdichtigkeit sichergestellt werden.

Die Erfindung hat sich zur Aufgabe gestellt, eine einfach herstellbare und eine Rauchgasdichtigkeit ermöglichende außenliegend an einer Decke oder Wand befestigbare Brandschutzmanschette zum Abschotten von Kabel- oder Leitungsdurchführungen montagefreundlicher zu gestalten.

Zum Lösen dieser Aufgabe schafft die Erfindung eine Brandschutzmanschette mit den Merkmalen des Anspruchs 1. Ein vorteilhaftes Herstellverfahren hierfür ist in dem Nebenanspruch angegeben.

Vorteilhafte Ausgestaltungen sind Gegenstand der Unteransprüche.

Die Erfindung schafft gemäß einem Aspekt davon eine Brandschutzmanschette zur außenliegenden Befestigung an einer Decke oder Wand zum Abschotten von Kabel- oder Leitungsdurchführungen, mit einem Gehäuse, einer Befestigungseinrichtung zum Befestigen des Gehäuses im Bereich einer Berandung der Kabel- oder Leitungsdurchführung außen an der Decke oder der Wand und einer Brandschutzeinlage in dem Gehäuse, wobei die Brandschutzeinlage einen nachgiebig verformbaren Formkörper aus einem elastischen ersten Material mit intumeszierenden Eigenschaften aufweist, wobei der Formkörper ein um eine zum Durchführen wenigstens eines Kabels oder einer Leitung ausgebildete Durchgangsöffnung herum ausgebildeter Ringkörper ist.

Im Gegensatz zu der aus der EP 2 607 761 B1 bekannten Brandschutzmanschette ist somit gerade nicht vorgesehen, dass der Formkörper den von einem Wandungsteil des Gehäuses umspannten Raum vollständig ausfüllt, sondern vielmehr ist bereits werksseitig eine Durchgangsöffnung innerhalb des Formkörpers vorgesehen. Dadurch muss der Monteur nicht mehr wie im Stand der Technik am Einsatzort eine Öffnung für die Kabel oder Leitungen in den Formkörper bohren. Gerade das Bohren des weichen nachgiebigen Formkörpers stellt sich aufgrund der Nachgiebigkeit als nicht einfach dar. Bei der Erfindung kann der Monteur einfach die Durchgangsöffnung zum Durchführen nutzen. Die Durchgangsöffnung ist vorzugsweise derart bemessen, dass sie im Durchmesser kleiner als der Durchmesser der meisten abzuschottenden Kabelstränge oder Leitungen ist. Durch die Nachgiebigkeit des Formkörpers kann die Durchgangsöffnung beim Durchstecken geweitet werden, so dass sich der Formköper elastisch an die Leitungen/Kabel anlegt.

Die Brandschutzmanschette ist insbesondere zur nachträglichen Abschottung Kabel- oder Leitungsdurchführungen geeignet und muss nicht in die Wand oder Decke mit eingegossen oder eingemauert werden. Somit sind auch nachträgliche Abschottungen, z.B. bei Renovierungsarbeiten oder für nachträglich in Bestandsgebäude eingebrachte zusätzliche Verkabelungen möglich. Die Kabel oder Leitungen können durch eine Öffnung in der Wand oder Decke hindurchgeführt werden, wobei die Öffnung weitaus größer bemessen sein kann als der Außendurchmesser eines Kabels oder einer Leitung oder eines Kabelbündels oder eines Leitungsbündels. Dennoch ist mit der Brandschutzmanschette nachträglich eine auch rauchdichte Abschottung möglich, ohne die Öffnung mühsam befüllen zu müssen. Der Ringkörper kann mit seiner Durchgangsöffnung einfach auf das wenigstens eine Kabel oder die wenigstens eine Leitung aufgefädelt werden und wird dann mittels dem Gehäuse und der Befestigungseinrichtung an der Berandung der Wand- oder Deckenöffnung fixiert. Vorzugsweise ist die Brandschutzmanschette derart ausgebildet und lässt sich so montieren, dass der Ringkörper dabei elastisch dichtend auf der Berandung aufliegt.

Die Durchgangsöffnung kann irgendwo in dem Formkörper vorgesehen sein. Sie kann somit z.B. mittig oder auch außermittig in dem Ringkörper vorgesehen sein.

Erfindungsgemäß ist weiter vorgesehen, dass die Durchgangsöffnung durch einen Füllkörper aus einem unterschiedlich zu dem ersten Material des Formkörpers ausgebildeten zweiten Material befüllt ist.

Der Füllkörper hat zusätzlich den Vorteil, dass die Brandschutzmanschette auch zunächst mit dem die Durchgangsöffnung verschließenden Füllkörper auch an noch nicht mit Kabeln oder Leitungen bestückten Schotts montiert werden kann und dann auch bei Leerbelegung die Rauchdichtigkeit erfüllt. Werden dann Kabel oder Leitungen montiert, kann die Füllung entfernt werden, was aufgrund der unterschiedlichen Materialen an den Schnittstellen zwischen den Materialien sehr einfach und ohne Werkzeug erfolgen kann.

Die Brandschutzmanschette bietet somit unterschiedliche Möglichkeiten der einfachen Abschottung einer Kabel- oder Leitungsdurchführung. Eine erste Alternative a) erfolgt mit folgenden Schritten: Vorsehen einer Kabel- oder Leitungsdurchführung, bei der wenigstens ein Kabel oder eine Leitung durch eine Öffnung in der Wand oder Decke hindurchgeführt ist, Auffädeln des Ringkörpers (26) auf das wenigstens eine Kabel oder die wenigstens eine Leitung, so dass das wenigstens eine Kabel oder die wenigstens eine Leitung die Durchgangsöffnung (28) passieren, und Fixieren des Ringkörpers (26) durch Befestigen des Gehäuses (12) mittels der Befestigungseinrichtung (38) außenliegend an einer Berandung der Öffnung. Bei einer zweiten Alternative b) erfolgt die Abschottung mit folgenden Schritten: Vorsehen einer Öffnung in einer Wand oder Decke für eine Kabel- oder Leitungsdurchführen, Befestigen der Brandschutzmanschette mittels der Befestigungseinrichtung an einer Berandung der Öffnung außenliegend an der Wand oder Decke, um die Öffnung rauchdicht zu verschließen, nachträgliches Hindurchführen wenigstens eines Kabels oder einer Leitung durch die Öffnung, wobei das Kabel oder die Leitung durch die Durchgangsöffnung des Ringkörpers geführt wird.

Das zweite Material ist z.B. Mineralwolle, Glaswolle, Steinwolle, Mineralfasermaterial, Dämmstoffmaterial und/oder ein unelastisches Material. Auch Kombinationen aus den vorgenannten Materialien sind möglich.

Bezüglich der Herstellung kann der Füllkörper in eine Durchgangsöffnung eines zuvor geformten Formkörpers eingeführt werden. Es ist aber auch möglich, den Füllkörper in einer Form zum Bilden des Formkörpers zu platzieren und so als Formeinsatz zum Formen der Durchgangsöffnung zu verwenden. Vorzugsweise werden hierbei Materialien gewählt, die sich leicht voneinander lösen lassen. Insbesondere wird der Füllkörper möglichst starr ausgebildet, so dass er leicht aus dem elastischen Formkörper ausgestoßen werden kann.

Es ist bevorzugt, dass die Brandschutzeinlage wenigstens einen ersten und einen zweiten Formkörper aufweist, welche ringscheibenförmig ausgebildet sind und vorzugsweise mit überlappenden Durchgangsöffnungen ausgebildet sind.

Es ist bevorzugt, dass der erste und der zweite Formkörper einander vollständig überdeckend ausgebildet sind.

Es ist bevorzugt, dass zwischen dem ersten und dem zweiten Formkörper wenigstens eine Ringscheibenplatte aus einem im Brandfall aufschäumenden oder kühlenden Brandschutzmaterial, welches unterschiedlich zu dem ersten Material ist, eingebettet ist. Vorzugsweise dient das Brandschutzmaterial als Isolationsmaterial.

Es ist bevorzugt, dass die Ringscheibenplatte sich über die gesamte radiale Ausbreitung des erste und/oder des zweiten Formkörpers erstreckt.

Es ist bevorzugt, dass die Ringscheibenplatte zwischen dem ersten und dem zweiten Formkörper eingegossen ist.

Es ist bevorzugt, dass das Brandschutzmaterial ausgewählt ist aus einer Gruppe von Materialien, die Dämmschichtbildner, Mineralfaserplattenmaterial und/oder Gipsisolationsplattenmaterial umfasst.

Es ist bevorzugt, dass das Gehäuse ein Ringgehäuse ist.

Es ist bevorzugt, dass das Gehäuse eine umlaufende Wandung aufweist.

Es ist bevorzugt, dass das Gehäuse aus einem Blechmaterial gebildet ist.

Es ist bevorzugt, dass die Befestigungseinrichtung durch Einbuchtungen an einer Wandung des Gehäuses ausgebildete Aufnahmenuten für je einen Schaft eines Befestigerelements aufweist.

Es ist bevorzugt, dass das Gehäuse an einer Stirnseite von einer Wandung nach innen abragende Anschlaglaschen aufweist, die eine Kante des Formkörpers umgreifen.

Es ist bevorzugt, dass die Befestigungseinrichtung Durchgangsöffnungen in Anschlaglaschen aufweist, die an einer Stirnseite von einer Wandung nach innen abragen und eine Kante des Formkörpers umgreifen.

Es ist bevorzugt, dass die Befestigungseinrichtung ein am Rand der Kabel- oder Leitungsdurchführung befestigbares Sockelelement und eine Verbindungseinrichtung zum Verbinden einer Wandung des Gehäuses mit dem Sockelelement aufweist.

Es ist bevorzugt, dass die Befestigungseinrichtung einen Bajonettverschluss zum Verbinden einer Wandung des Gehäuses mit einem gesondert befestigbaren Sockelelement aufweist.

Es ist bevorzugt, dass das Gehäuse ringförmig mit einem Verschluss ausgebildet ist, der geöffnet und geschlossen werden kann. Damit kann das Gehäuse um ein Kabel oder eine Leitung bei geöffnetem Verschluss herumgeführt und die Brandschutzmanschette mit geschlossenem Verschluss fixiert werden kann.

Gemäß einem weiteren Aspekt schafft die Erfindung ein Verfahren zum Herstellen einer Brandschutzmanschette zum Abschotten von Kabel- oder Leitungsdurchführungen, wobei die Brandschutzmanschette ein Gehäuse und eine Brandschutzeinlage aufweist, umfassend:
a) Bereitstellen einer aus einem Blechmaterial gebildeten Wandung zum Bilden des Gehäuses und
b) Formen eines Formkörpers aus einem intumeszierendem nachgiebigen ersten Material unter Aufschäumen oder Vergießen des Material in einer Form, wobei Schritt b) den Schritt umfasst:
   b1) Bilden einer Durchgangsöffnung in dem Formkörper mittels eines die Durchgangsöffnung in der Form ausbildenden Formeinsatzes.

Es ist bevorzugt, dass in Schritt b1) als Formeinsatz ein Füllkörper aus einem zweiten, zu dem ersten Material unterschiedlichen Material verwendet wird.

Es ist bevorzugt, dass Schritt b) umfasst:
b2) Einbetten wenigstens einer Ringscheibenplatte aus einem gegenüber dem ersten Material unterschiedlichen Brandschutzmaterial zum Unterteilen der Form in wenigstens einen ersten Ringscheibenbereich und einen zweiten Ringscheibenbereich und
b3) Formen eines ersten Formkörpers in dem ersten Ringscheibenbereich und eines zweiten Formkörpers in dem zweiten Ringscheibenbereich.

Es ist bevorzugt, dass als Brandschutzmaterial eines oder mehrere der Materialien aus der Gruppe von Materialien eingesetzt wird, die Dämmschichtbildner, Mineralfaserplattenmaterial und/oder Gipsisolationsplattenmaterial umfasst.

Es ist bevorzugt, dass die wenigstens eine Ringscheibenplatte zwischen dem ersten Formkörper und dem zweiten Formkörper eingebettet in der Brandschutzeinlage verbleibt.

Bei der Erfindung ist weiterhin ein Formkörper aus elastisch verformbarem Material vorgesehen. Anders als in der EP 2 607 761 B1 vorgesehen, füllt der Formkörper den von dem Wandungsteil eines Gehäuses umspannten Raum gerade nicht vollständig aus; vielmehr ist der Formkörper als Ringkörper vorgesehen, so dass in seinem Inneren eine mittig oder außermittig vorgesehene Durchgangsöffnung besteht.

Diese Durchgangsöffnung ist im Auslieferungszustand mit einer Füllung versehen, so dass die Brandschutzmanschette auch mit einer Leerbelegung (noch keine Kabel vorhanden) verwendet werden kann und dennoch auch dann bereits eine Rauchgasdichtigkeit besteht. Der Füllkörper ist allerdings aus einem anderen Material als der Formkörper ausgebildet, so dass der Füllkörper leicht aus der Durchgangsöffnung entfernbar ist.

Bei der Herstellung kann der Füllkörper als Formeinsatz zum Ausformen der Durchgangsöffnung in dem Formteil verwendet werden.

Die Erfindung betrifft insbesondere eine Brandschutzmanschette mit einem wandaußenlegenden Stopfen, der durch einen Formkörper aus weichem elastischen Material mit intumeszierenden Eigenschaften gebildet sein kann. Der Stopfen ist beispielsweise mit einem zentralen Durchgang versehen, in dem ein Stück Mineralwolle platziert ist. Brandversuche haben gezeigt, dass trotz der nicht vollständigen Ausfüllung des Innenraumes des Gehäuses durch den Formkörper Feuerwiderstandszeiten größer als 100 Minuten erreichbar sind.

Vorzugsweise bildet die Brandschutzmanschette ein auf einer Wand aufsetzbares Minischott, durch das Elektrokabel geführt werden können. Der Minischott ist lediglich teilweise durch einen intumeszierenden und elastischen Stoff ausgefüllt, wobei eine Durchgangsöffnung nicht durch den intumeszierenden und elastischen Stoff ausgefüllt ist.

Der den Stopfen bildende Formkörper ist beispielsweise aus einem geschäumten Material mit intumeszierenden Eigenschaften gebildet. Vorzugsweise ist der Stopfen aus einem PU-Baustoff gebildet. Vorzugsweise ist der Stopfen elastisch. Vorzugsweise ist der Baustoff geschäumtes Polyurethan mit Flammausrüstung.

Während bei der bekannten Ausführung auf der Baustelle Löcher eingebracht werden mussten, durch die die Elektrokabel geführt werden, ist nun bereits herstellerseits eine Durchgangsöffnung vorgesehen.

Beispielsweise wird ein Stopfen gefertigt, der in der Mitte eine Öffnung hat, die bereits beim Vergießen mit einem Stück Glaswolle-Dämmstoff oder SteinwolleDämmstoff verschlossen wird. Damit wird dem Verarbeiter erspart, das Loch zu setzen, um Kabel zu montieren. Das Loch kann beliebig in dem Formkörper platziert sein. Beispielsweise ist das Loch mittig vorgesehen.

Der als Ringkörper ausgebildete Formkörper kann den Raum zwischen der Durchgangsöffnung und einem Wandungsteil des Gehäuses ausfüllen. Vorzugsweise sind jedoch mehrere Ringscheiben als Formkörper vorgesehen, wobei zwischen den Ringscheiben weitere Scheiben aus anderen Brandschutzmaterialien eingebracht sind.

Beispielsweise ist die Brandschutzeinlage, welche den Innenraum des Gehäuses ausfüllt, durch einen Sandwich-Aufbau gebildet. In dem Sandwich kann eine Abfolge PU-Schaum, Dämmschichtbildner, PU-Schaum genutzt werden. Es können zwei, drei oder mehr Formkörper, jeweils mit Dämmschichtbildner dazwischen vorgesehen sein. Durchgängig durch alle Formkörper und Dämmschichtbildner ist die Durchgangsöffnung vorgesehen, welche mit einer Füllung, beispielsweise aus Mineralwolle oder sonstigem Mineralfasermaterial, befüllt sein kann.

Durch den Sandwich-Aufbau kann die beispielsweise als Stopfen ausgebildete Brandschutzeinlage bei Bewärmung einen noch festeren formschlüssigen Kontakt aufnehmen und die Feuerwiderstandszeit erhöhen.

Demnach ist bei dieser bevorzugten Ausgestaltung mit mehreren Formkörpern, die als Ringscheiben mit einem anderen Material dazwischen ausgebildet sind, so ausgebildet, dass die Formkörper gerade nicht den von dem Wandungsteil umspannten Raum vollständig ausfüllen, vielmehr verbleibt ein Durchgangsloch durch alle Formkörper hindurch und weiter ist noch ein Dämmschichtbildnermaterial vorgesehen. Das Material zwischen den Formkörpern kann zum Beispiel Dämmschichtbildner sein und/oder es können Gipsisolationsplatten oder Mineralfaserplatten vorgesehen sein, die die Durchwärmung des Objektes verlangsamen sollen.

Das Material zwischen den Formkörpern kann die gesamte Größe des Stopfens umfassen, d. h. in Draufsicht in einer axialen Richtung die gleiche Fläche wie der Formkörper aufweisen. Mit anderen Worten können die Dämmschichtbildnermaterialien oder sonstigen Zwischenmaterialien in Draufsicht (in Richtung des Durchgangs der späteren Kabel/Leitungen) die Formkörper vollständig überlappen. Anstatt dieser die gesamte Größe des Stopfens umfassenden Ausbildungen der Zwischenmaterialien können Dämmschichtbildner oder andere Isolationsschichten als eingegossene Scheibe vorgesehen sein, die im Vergussprozess des Stopfens direkt eingebracht werden. So können im Inneren des elastischen Materials zum Beispiel Ringscheiben aus Dämmschichtbildner oder aus Gipsisolationsplatte oder Mineralfaserplatte oder sonstigen Isolationsschichten vorgesehen sein.

Bei der Verwendung der Brandschutzmanschette bietet es sich an, die Elektrokabel oder sonstigen abzuschottenden Leitungen mit einem Booster noch besser zu schützen. Vorzugsweise wird kein ablatives Material vorgesehen, sondern ein intumeszierender Dämmschichtbildner, der deutlich leistungsfähiger expandieren kann wie der Stopfen. Dies führt zu einer Verbesserung der Versch lusseigenschaften.

Bezüglich des Gehäuses wird bei einer Ausgestaltung eine Befestigung mit den für Brandschutzmanschetten üblichen Haltelaschen vorgesehen, welche von einem Wandungsteil des Gehäuses abragen.

Bei anderen Varianten entfallen die nach außen laufenden Haltelaschen.

Eine Ausgestaltung setzt Nuten von außen, so dass man die Manschette mit Befestigern, wie insbesondere Gewindestangen, befestigen kann. Es können beispielsweise Gewindestangen genutzt werden, die zum Aufbau von Kabelschächten durch die Wand gesteckt werden. Die Gewindestangen können aber auch rein zum Befestigen der Brandschutzmanschette durch die Wand gesteckt werden. Die Führung wird durch die Wand erbracht.

Eine andere mögliche Ausgestaltung setzt einfach in nach innen umgebogene Anschlaglaschen Haltelöcher, und die zuvor erläuterten Befestiger, insbesondere Gewindestangen, werden zur Befestigung dort durchgesteckt.

Eine weitere Ausgestaltung weist einen einzigen, vorzugsweise runden, Tellerfuß als Sockelelement auf. Der Tellerfuß erstreckt sich radial um die Manschette herum. Dies ist eine zweiteilige Lösung, welche eine Manschette und einen Fuß aufweist. Der Fuß sitzt auf der Wand, sozusagen wie eine PKW-Bremsscheibe. Bei einer Ausgestaltung schauen in Längsrichtung aus dem Fuß Rastfüße heraus. Man kann dann die Manschette wie bei einem Bajonett aufsetzen. Dreht man die Manschette um einen vorbestimmten Winkel, beispielsweise um 30 Grad (+/- 5 Grad) gegen den Fuß, können die Rastfüße in einer Führungsbahn - beispielsweise in Senken oder dergleichen - einrasten, welche in der Manschette eingebracht sind.

Ausführungsbeispiele der Erfindung werden im Folgenden anhand der beigefügten Zeichnungen näher erläutert. Darin zeigt:
- Fig. 1: eine perspektivische Darstellung einer ersten Ausführungsform einer Brandschutzmanschette mit einem Gehäuse und einer Brandschutzeinlage;
- Fig. 2: eine Draufsicht auf ein Blechelement, aus dem das Gehäuse der Ausführungsform gemäß Fig. 1 zu bilden ist;
- Fig. 3: eine Draufsicht auf das aus dem Blechelement aus Fig. 2 gebildete Gehäuse;
- Fig. 4: einen Diagonalschnitt durch die Brandschutzmanschette von Fig. 1;
- Fig. 5: eine teilweise im Schnitt und teilweise perspektivische Darstellung einer Brandschutzmanschette gemäß einer zweiten Ausführungsform;
- Fig. 6: eine Draufsicht auf eine Brandschutzmanschette gemäß einer dritten Ausführungsform;
- Fig. 7: eine Seitenansicht auf die Brandschutzmanschette gemäß der dritten Ausführungsform;
- Fig. 8: eine Draufsicht auf ein Gehäuse der dritten Ausführungsform;
- Fig. 9: eine perspektivische Darstellung der Brandschutzmanschette gemäß der dritten Ausführungsform;
- Fig. 10: eine Draufsicht auf eine Brandschutzmanschette gemäß einer vierten Ausführungsform;
- Fig. 11: eine Seitenansicht der Brandschutzmanschette gemäß der vierten Ausführungsform;
- Fig. 12: eine Draufsicht auf ein Gehäuse der Brandschutzmanschette gemäß der vierten Ausführungsform;
- Fig. 13: eine perspektivische Ansicht einer Brandschutzmanschette gemäß einer fünften Ausführungsform;
- Fig. 14: eine Draufsicht auf die Brandschutzmanschette gemäß der fünften Ausführungsform;
- Fig. 15: eine Seitenansicht der Brandschutzmanschette gemäß der fünften Ausführungsform;
- Fig. 16: eine Vergrößerung des Details A aus der Fig. 15; und
- Fig. 17: eine perspektivische Darstellung eines Gehäuses der Brandschutzmanschette gemäß der fünften Ausführungsform.

In den Figuren sind unterschiedliche Ausführungsformen einer Brandschutzmanschette 10 zum Abschotten von Leitungs- oder Kabeldurchführungen durch eine Decke oder eine Wand dargestellt.

Die Brandschutzmanschette 10 weist ein Gehäuse 12 und ein in dem Gehäuse 12 gehaltene Brandschutzeinlage 14 auf.

Das Gehäuse 12 ist aus einem Blechmaterial, beispielsweise aus Stahlblech, gebildet und weist einen Wandungsteil 16 auf, der um die Brandschutzeinlage 14 herum angeordnet werden kann. An wenigstens einer Längskante des Wandungsteils 16, welche Längskante sich im bestimmungsgemäßen Gebrauch in Umfangsrichtung um die Brandschutzeinlage 14 herum erstreckt, kann das Gehäuse 12 Anschlaglaschen 18 aufweisen, welche nach innen gebogen werden können.

Die Brandschutzeinlage 14 weist einen Stopfen in dem Gehäuse 12 auf. Wird das Gehäuse 12 außen auf einer Wand oder Decke, durch die die Leitungen oder Kabel zu führen sind angebracht, dann wird durch das Gehäuse 12 der Stopfen 20 außenanliegend auf die Wand- oder Deckendurchführung angebracht.

Die Brandschutzeinlage 14 weist wenigstens einen Formkörper 22 aus einem elastisch verformbaren ersten Material 24 mit intumeszierenden Eigenschaften auf.

Das erste Material 24 kann beispielsweise ein aufgeschäumtes Polyurethan mit Zusatzmitteln, welche eine im Brandfall aufschäumende Wirkung entfalten, sein.

Der Formkörper 22 ist in dem Gehäuse 12 in dem vom Wandungsteil 16 umspannten Raum untergebracht. Allerdings füllt der Formkörper 22 diesen Raum nicht vollständig aus, sondern ist vielmehr als Ringkörper 26 um eine Durchgangsöffnung 28 herum ausgebildet.

Die Durchgangsöffnung 28 kann, wie in den dargestellten Ausführungsbeispielen gezeigt, mittig angeordnet sein oder auch außermittig. In der Durchgangsöffnung 28 kann sich eine Füllung 30 befinden, die aus einem zweiten Material 32 gebildet ist, welches zu dem ersten Material 24 unterschiedlich ist.

Das zweite Material 32 ist insbesondere starr ausgeführt. Das zweite Material 32 kann insbesondere aus Mineralfasern aufgebaut sein. Beispielsweise ist die Füllung 30 aus einem Glasfaserdämmstoff oder einem Steinwolledämmstoff gebildet.

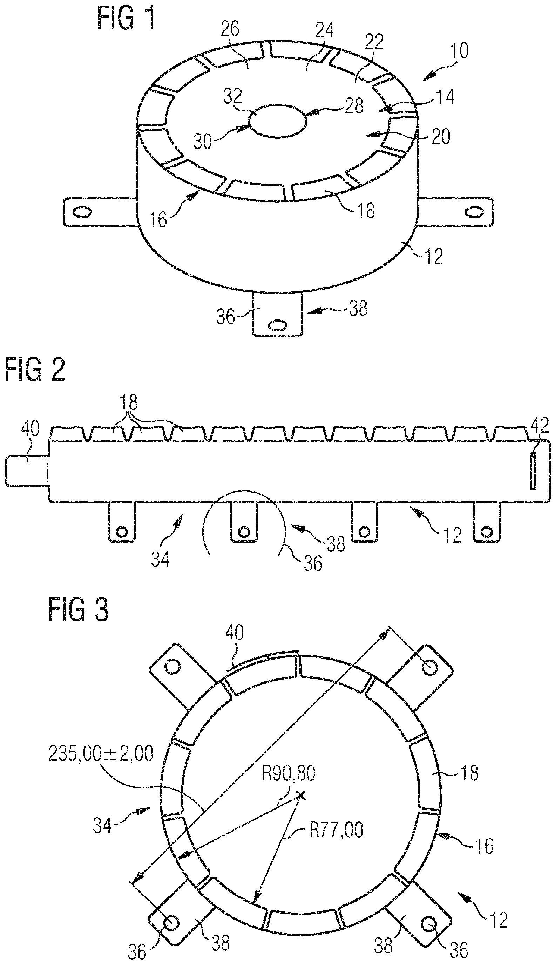

In den Figuren 1 bis 4 ist eine erste Ausführungsform der Brandschutzmanschette 10 gezeigt, wobei nur ein als Ringkörper 26 ausgebildeter Formkörper 22 innerhalb des Gehäuses 12 angeordnet ist. Der Ringkörper 26 hat einen zylindrischen Außenumfang. Jedoch ist der Ringkörper 26 nicht als Vollkörper ausgebildet, sondern ist um die Durchgangsöffnung 28 herum angeordnet.

Das Gehäuse 12 kann aus einem Blechstreifen 34 gebildet sein, wie er in Fig. 2 in noch ebener Form und in Fig. 3 zu dem Gehäuse 12 umgebogen dargestellt ist.

Bei den in den Fig. 1 bis 5 dargestellten Ausgestaltungen ragen an einer Kante des Blechstreifens 34 nach innen zu biegende Anschlaglaschen 18 ab, wobei an der anderen Kante des Blechstreifens 34 nach außen abzubiegende Haltelaschen 36 vorgesehen sind, welche Teil einer Befestigungseinrichtung 38 darstellen.

Die Befestigungseinrichtung 38 der unterschiedlichen Ausführungsformen der Brandschutzmanschette 10 ist eine Einrichtung zur Befestigungsmanschette 10 an dem Randbereich der Wand- oder Deckendurchführung. Sie kann die bei der ersten und zweiten Ausführungsform vorgesehenen nach außen abzubiegenden Haltelaschen 36 aufweisen.

Wie weiter in Figs. 2 und 3 dargestellt, ist an einem Ende des Blechstreifens 34 eine Einstecklasche 40 und an dem anderen Ende des Blechstreifens 34 wenigstens ein Einsteckschlitz 42 zum Einstecken der Einstecklasche 40 vorgesehen. Die Einstecklasche 40 kann in den Einsteckschlitz 42 eingeführt und dann umgebogen werden. Einstecklasche 40 und Einsteckschlitz 42 sind somit ein Beispiel für einen Verschluss des Gehäuses 12. Der Verschluss kann auch unterschiedliche ausgebildet sein.

Bei nicht dargestellten Ausführungsformen können eine Reihe von Einsteckschlitzen 42 vorgesehen sein, die entlang der Längsrichtung des Blechstreifens 34 mit Abstand zueinander angeordnet sind. Auf diese Weise kann mit einer Länge eines Blechstreifens ein unterschiedlicher Durchmesser des Gehäuses 12 gebildet werden.

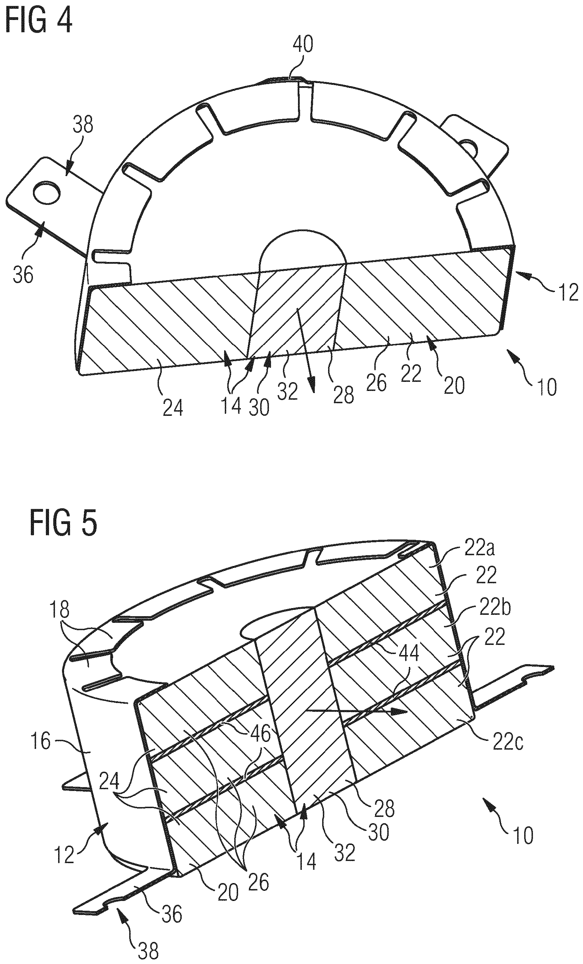

Fig. 4 zeigt den Formkörper 22 mit der Durchgangsöffnung 28 und der darin eingesetzten Füllung 30.

Bei der Herstellung der Brandschutzeinlage 14 wird derart vorgegangen, dass für den Stopfen 20 eine Form mit einem zylindrischen Innenbereich vorgesehen wird, in den das erste Material 24 in noch nicht aufgeschäumter Form eingebbar ist. An dem Bereich, an dem die Durchgangsöffnung ausgebildet werden soll, wird die Füllung 30 als Formeinsatz eingesetzt. Dann erfolgt das Aufschäumen des ersten Materials 24, so dass sich um die Füllung 30 herum der Ringkörper 26 ausbildet.

Da das zweite Material 32 starr ausgeführt ist, lässt es sich unter entsprechendem Druck in axialer Richtung aus der Durchgangsöffnung 28 herausstoßen, so dass lediglich der als Ringkörper 26 ausgesteuerte Formkörper 22 vorhanden ist. Durch diese Durchgangsöffnung 28 können dann Leitungen durchgeführt werden.

Soll der Ringkörper 26 auf bereits verlegte Leitungen aufgesetzt werden, kann er an einer Stelle eingeschnitten werden. Es muss aber kein erstes Material 24 aus der Mitte herausgeschnitten werden, da bereits die Durchgangsöffnung 28 vorgesehen ist. Durch die Elastizität des ersten Materials 24 schmiegt sich der Formkörper 22 an die entsprechenden Leitungen an, so dass entsprechend eine Rauchdichtigkeit gegeben ist.

Nach Aufbringen des Ringkörpers 26 auf die Leitungen wird außenseitig das Gehäuse 12 um den Stopfen 20 herumgeführt und mittels der Befestigungseinrichtung 38 im Bereich der Wand- oder Deckendurchführung befestigt. Die nach innen zu biegenden Anschlaglaschen 18 umgreifen eine Kante des Ringkörpers 26 und halten ihn an der Decke oder Wand fest.

Fig. 5 zeigt eine zweite Ausführungsform der Brandschutzmanschette 10. Hier ist nicht nur ein als Ringkörper 26 ausgebildeter Formkörper 22 vorgesehen, sondern vielmehr sind ein erster als Ringkörper 26 ausgebildeter Formkörper 22a, ein zweiter als Ringkörper 26 ausgebildeter Formkörper 22b und ein dritter als Ringkörper 26 ausgebildeter Formkörper 22c vorgesehen, wobei die Durchgangsöffnung 28 durch alle Formkörper 22a, 22b und 22c geführt ist. Zwischen jeweils zweien der Formkörper 22a-22c ist eine Isolationsschicht 44 aus einem dritten Material 46 - insbesondere in Form eines Brandschutzmaterials - vorgesehen. Die Isolationsschicht 44 kann über die gesamte Fläche der Formkörper 22a-22c vorgesehen sein. Bei anderen, hier nicht näher dargestellten Ausführungsformen ist die Isolationsschicht 44 nur in einem Bereich der Grenzschicht zwischen den Formkörpern 22a-22c vorgesehen. In diesem Fall ist die Isolationsschicht 44 in die Formkörper 22, 22a - 22c eingebettet.

Das dritte Material 46 kann beispielsweise einen Dämmschichtbildner oder ein im Brandfall kühlendes Material, wie z. B. ein im Brandfall Feuchtigkeit abgebendes Material sein. Beispiele hierfür sind Gipsisolationsplatten. Auch kann das dritte Material 46 aus einer Mineralfaserplatte gebildet sein.

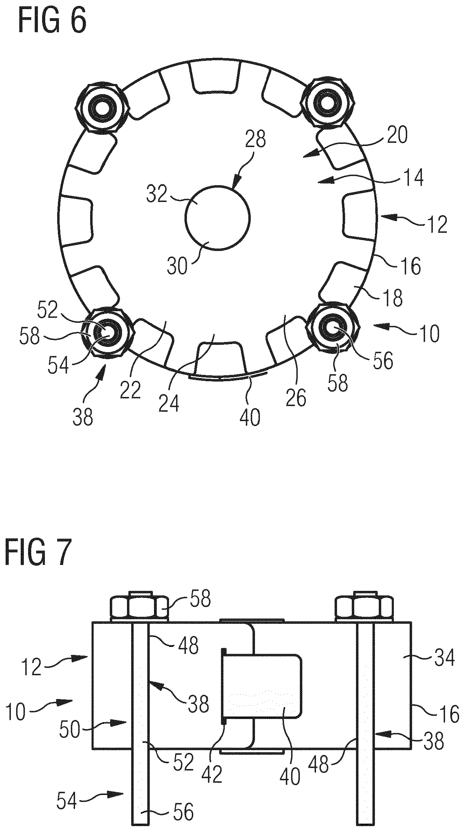

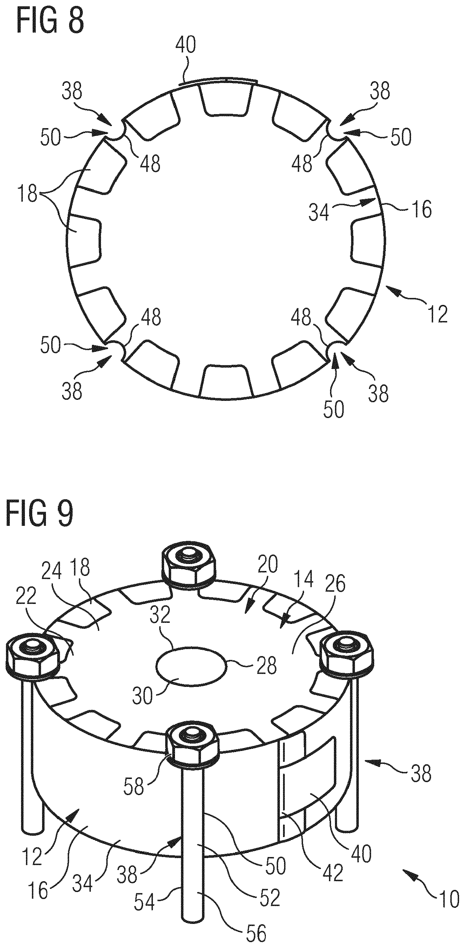

In den Figuren 6 bis 9 ist eine dritte Ausführungsform der Brandschutzmanschette 10 dargestellt. Die Brandschutzmanschette 10 der dritten Ausführungsform kann die Brandschutzeinlage 14 der ersten oder der zweiten Ausführungsform aufweisen. Auch bei dem Gehäuse 12 sind der Wandungsteil 16, die Einstecklasche 40, der Einsteckschlitz 42 sowie Anschlaglaschen 18 wie bei der ersten und zweiten Ausführungsform vorgesehen. Unterschiedlich zu der ersten und zweiten Ausführungsform ist bei der dritten Ausführungsform die Ausbildung der Befestigungseinrichtung 38.

Bei der dritten Ausführungsform sind die nach außen abzubiegenden Haltelaschen 36 nicht vorhanden. Vielmehr sind an umfangsmäßig beabstandeten Stellen des Wandungsteils 16 Einbuchtungen 48 in dem Wandungsteil 16 vorgesehen, so dass an dem Außenumfang des Gehäuses 12 Nuten 50 entstehen, die zur Aufnahme eines Schafts 52 eines Befestigers 54 dienen. Der Befestiger 54 kann beispielsweise durch eine Gewindestange 56 gebildet sein, auf die eine Mutter 58 zur Festlegung des Gehäuses 12 aufschraubbar ist. Zur Befestigung können die Gewindestangen 56 in die Wand eingeführt werden. Ansonsten ist das Gehäuse 12 aufgebaut wie bei der ersten bis zweiten Ausführungsform.

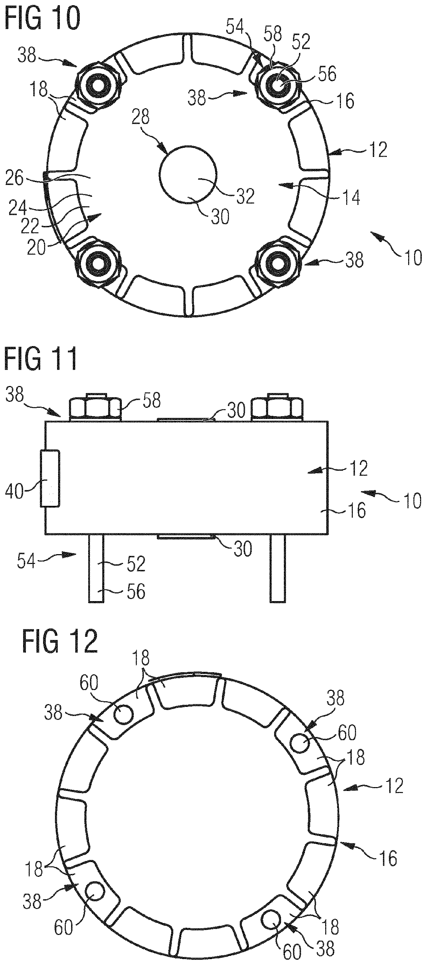

In den Figuren 10 bis 12 ist eine vierte Ausführungsform der Brandschutzmanschette dargestellt, die ebenfalls die Brandschutzeinlage 14 der ersten oder der zweiten Ausführungsform aufweisen kann. Der Unterschied liegt auch hier in einer anderen Ausgestaltung der Befestigungseinrichtung 38. Auch hier werden Befestiger 54, beispielsweise in Form einer Gewindestange 56 mit Mutte 58 verwendet. Hierzu sind in einigen der nach innen zu biegenden Anschlaglaschen 18 Aufnahmeöffnungen 60 für die Befestiger 54 vorgesehen.

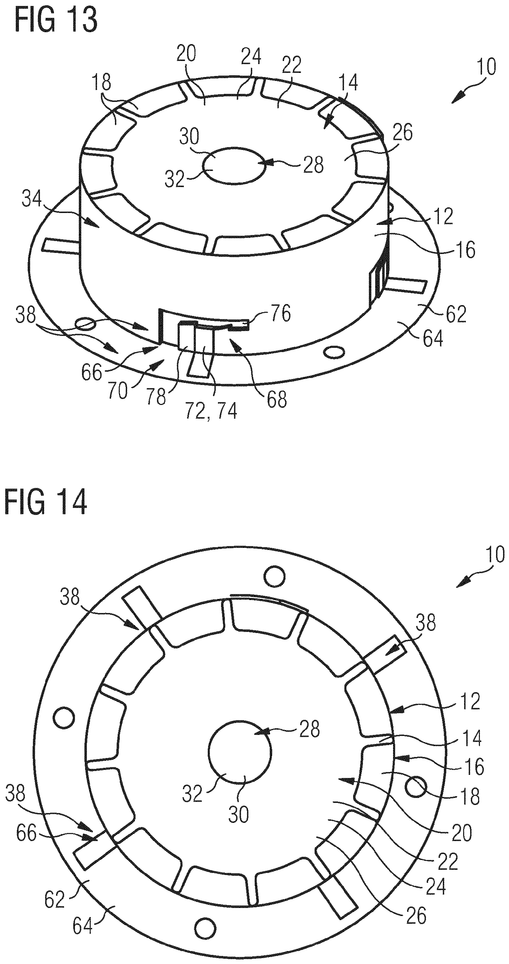

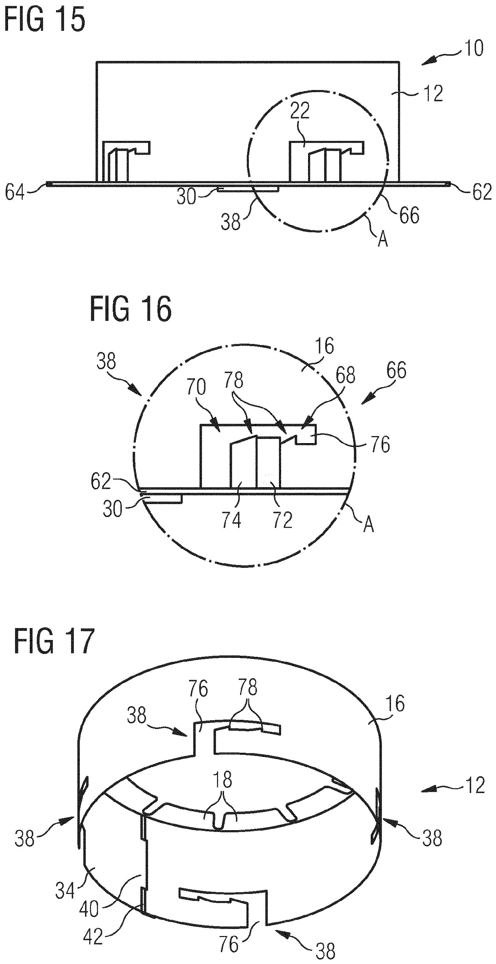

In den Figuren 13 bis17 ist eine fünfte Ausführungsform der Brandschutzmanschette 10 dargestellt, die sich von den zuvor erläuterten Ausführungsformen durch eine anders ausgestaltete Befestigungseinrichtung 38 unterscheidet.

Auch hier weist das Gehäuse 12 lediglich den Wandungsteil 16 und nach innen zu biegende Anschlaglaschen 18, jedoch keine nach außen abzubiegende Haltelaschen 36 auf.

Vielmehr ist ein Sockelelement 62 vorgesehen, welches als Tellerfuß 64 ausgebildet sein kann, der um die Wand- oder Deckendurchführung herum angeordnet und befestigt werden kann.

Zwischen dem Sockelelement 62 und dem Gehäuse 12 ist eine lösbare Verbindungseinrichtung 66 vorgesehen. Die Verbindungseinrichtung 66 weist vorzugsweise eine Rastverbindung 68 und/oder einen Bajonettverschluss 70 auf.

Hierzu können an dem Tellerfuß 64 mehrere nach oben ragende Hakenelemente 72 oder Bügel 74 vorgesehen sein. In dem Wandungsteil 16 sind an der Kante, die den nach innen zu biegenden Haltelaschen 18 gegenüberliegt, L-förmige Ausnehmungen 76 vorgesehen. Die Hakenelemente 72 bzw. Bügel 74 können in die L-förmige Ausnehmung 76 eingeführt und durch Verdrehung des Gehäuses 12 daran eingerastet werden. Hierzu können an dem entsprechend in Umfangsrichtung ausgerichteten Zweig der L-förmigen Ausnehmung 76 wenigstens eine Rastnase 78 vorgesehen sein.

### Bezugszeichenliste:

- 10: Brandschutzmanschette
- 12: Gehäuse
- 14: Brandschutzeinlage
- 16: Wandungsteil
- 18: Anschlaglaschen
- 20: Stopfen
- 22: Formkörper
- 22a: erster Formkörper
- 22b: zweiter Formkörper
- 22c: dritter Formkörper
- 24: erstes Material
- 26: Ringkörper
- 28: Durchgangsöffnung
- 30: Füllung
- 32: zweites Material
- 34: Blechstreifen
- 36: nach außen abzubiegende Haltelaschen
- 38: Befestigungseinrichtung
- 40: Einstecklasche
- 42: Einsteckschlitz
- 44: Isolationsschicht
- 46: drittes Material
- 48: Einbuchtungen
- 50: Nut
- 52: Schaft
- 54: Befestiger
- 56: Gewindestange
- 58: Mutter
- 60: Aufnahmeöffnung
- 62: Sockelelement
- 64: Tellerfuß
- 66: Verbindungseinrichtung
- 68: Rastverbindung
- 70: Bajonettverschluss
- 72: Hakenelement
- 74: Bügel
- 76: L-förmige Ausnehmung
- 78: Rastnase

## Patentansprüche

1. Brandschutzmanschette (10) zur außenliegenden Befestigung an einer Decke oder Wand zum Abschotten von Kabel- oder Leitungsdurchführungen, mit einem Gehäuse (12), einer Befestigungseinrichtung (38) zum Befestigen des Gehäuses (12) im Bereich einer Berandung der Kabel- oder Leitungsdurchführung außen an der Decke oder der Wand und einer Brandschutzeinlage (14) in dem Gehäuse (12), wobei die Brandschutzeinlage (14) einen nachgiebig verformbaren Formkörper (22) aus einem elastischen ersten Material (24) mit intumeszierenden Eigenschaften aufweist, **dadurch gekennzeichnet,**
**dass** der Formkörper (22) im Auslieferungszustand ein um eine zum Durchführen wenigstens eines Kabels oder einer Leitung ausgebildete Durchgangsöffnung (28) herum ausgebildeter Ringkörper (26) ist und dass die Durchgangsöffnung (28) im Auslieferungszustand durch eine Füllung (30) befüllt ist, die aus einem unterschiedlich zu dem ersten Material (24) des Formkörpers (22) ausgebildeten zweiten Material (32) gebildet ist, so dass die Füllung aufgrund der Schnittstellen zwischen den unterschiedlichen Materialien (24, 32) ohne Werkzeug aus der Durchgangsöffnung (28) entfernbar ist.

2. Brandschutzmanschette (10) nach Anspruch 1,
**dadurch gekennzeichnet,**
**dass** die Durchgangsöffnung (28) mittig oder außermittig in dem Ringkörper (26) vorgesehen ist.

3. Brandschutzmanschette (10) nach einem der voranstehenden Ansprüche, **dadurch gekennzeichnet,**
**dass** das zweite Material (32) ausgewählt ist aus einer Gruppe von Materialien, die Mineralwolle, Glaswolle, Steinwolle, Mineralfasermaterial, Dämmstoffmaterial und/oder unelastisches Material sowie Kombinationen aus den vorgenannten Materialien aufweist.

4. Brandschutzmanschette (10) nach einem der voranstehenden Ansprüche, **dadurch gekennzeichnet,**
**dass** die Brandschutzeinlage (14) wenigstens einen ersten und einen zweiten Formkörper (22a, 22b) aufweist, welche ringscheibenförmig mit überlappenden Durchgangsöffnungen (28) ausgebildet sind.

5. Brandschutzmanschette (10) nach Anspruch 4,
**dadurch gekennzeichnet,**
**dass** der erste und der zweite Formkörper (22a, 22b) einander vollständig überdeckend ausgebildet sind.

6. Brandschutzmanschette (10) nach Anspruch 4 oder 5,
**dadurch gekennzeichnet,**
**dass** zwischen dem ersten und dem zweiten Formkörper (22a, 22b) wenigstens eine Ringscheibenplatte aus einem im Brandfall aufschäumenden oder kühlenden Brandschutzmaterial (46), welches unterschiedlich zu dem ersten Material (24) ist, eingebettet ist.

7. Brandschutzmanschette (10) nach Anspruch 6,
**dadurch gekennzeichnet**,
7.1 dass die Ringscheibenplatte sich über die gesamte radiale Ausbreitung des erste und/oder des zweiten Formkörpers (22a, 22b) erstreckt, und/oder
7.2 dass die Ringscheibenplatte zwischen dem ersten und dem zweiten Formkörper (22a, 22b) eingegossen ist; und/oder
7.3 dass das Brandschutzmaterial (46) ausgewählt ist aus einer Gruppe von Materialien, die Dämmschichtbildner, Mineralfaserplattenmaterial und/oder Gipsisolationsplattenmaterial umfasst.

8. Brandschutzmanschette (10) nach einem der voranstehenden Ansprüche, **dadurch gekennzeichnet**,
8.1 dass das Gehäuse (12) ein Ringgehäuse ist; und/oder
8.2 dass das Gehäuse (12) eine umlaufende Wandung aufweist; und/oder
8.3 dass das Gehäuse (12) aus einem Blechmaterial gebildet ist; und/oder
8.4 dass die Befestigungseinrichtung (38) durch Einbuchtungen (48) an einer Wandung des Gehäuses ausgebildete Aufnahmenuten (50) für je einen Schaft (52) eines Befestigerelements (54) aufweist;
8.5 dass das Gehäuse (12) an einer Stirnseite von einer Wandung nach innen abragende Anschlaglaschen (18) aufweist, die eine Kante des Formkörpers (22) umgreifen; und/oder
8.6 dass die Befestigungseinrichtung (38) Aufnahmeöffnungen (60) in Anschlaglaschen (18) aufweist, die an einer Stirnseite von einer Wandung nach innen abragen und eine Kante des Formkörpers (22) umgreifen; und/oder
8.7 dass die Befestigungseinrichtung (38) ein am Rand der Kabel- oder Leitungsdurchführung befestigbares Sockelelement (62) und eine Verbindungseinrichtung (66) zum Verbinden einer Wandung des Gehäuses (12) mit dem Sockelelement (62) aufweist; und/oder
8.8 dass die Befestigungseinrichtung (38) einen Bajonettverschluss (70) zum Verbinden einer Wandung des Gehäuses (12) mit einem gesondert befestigbaren Sockelelement (62) aufweist; und/oder
8.9 dass das Gehäuse ringförmig mit einem Verschluss zum Herumführen des Gehäuses um ein Kabel oder eine Leitung bei geöffnetem Verschluss und zum Fixieren der Brandschutzmanschette mit geschlossenem Verschluss ausgebildet ist.

9. Verfahren zum Herstellen einer Brandschutzmanschette (10) zur außenliegenden Befestigung an einer Decke oder Wand zum Abschotten von Kabel- oder Leitungsdurchführungen, wobei die Brandschutzmanschette (10) ein Gehäuse (12) und eine Brandschutzeinlage (14) aufweist, umfassend:
a) Bereitstellen einer aus einem Blechmaterial gebildeten Wandung zum Bilden des Gehäuses (12) und
b) Formen eines Formkörpers (22) aus einem intumeszierenden nachgiebigen ersten Material (24) unter Aufschäumen oder Vergießen des Materials in einer Form,
wobei Schritt b) den Schritt umfasst:
b1) Bilden einer Durchgangsöffnung (28) in dem Formkörper (22) mittels eines die Durchgangsöffnung (28) in der Form ausbildenden Formeinsatzes.

10. Verfahren nach Anspruch 9,
**dadurch gekennzeichnet,**
**dass** in Schritt b1) als Formeinsatz eine Füllung (30) aus einem zweiten, zu dem ersten Material (24) unterschiedlichen Material verwendet wird.

11. Verfahren nach einem der Ansprüche 9 oder 10,
**dadurch gekennzeichnet,**
**dass** Schritt b) umfasst:
b2) Einbetten wenigstens einer Ringscheibenplatte aus einem gegenüber dem ersten Material (24) unterschiedlichen Brandschutzmaterial (46) zum Unterteilen der Form in wenigstens einen ersten Ringscheibenbereich und einen zweiten Ringscheibenbereich und
b3) Formen eines ersten Formkörpers (22a) in dem ersten Ringscheibenbereich und eines zweiten Formkörpers (22b) in dem zweiten Ringscheibenbereich.

12. Verfahren nach Anspruch 11,
**dadurch gekennzeichnet**,
12.1 dass als Brandschutzmaterial (46) eines oder mehrere der Materialien aus der Gruppe von Materialien eingesetzt wird, die Dämmschichtbildner, Mineralfaserplattenmaterial und/oder Gipsisolationsplattenmaterial umfasst; und/oder
12.2 dass die wenigstens eine Ringscheibenplatte zwischen dem ersten Formkörper (22a) und dem zweiten Formkörper (22b) eingebettet in der Brandschutzeinlage (14) verbleibt.

13. Verwenden einer Brandschutzmanschette (10) nach einem der Ansprüche 1 bis 8 zum Abschotten einer Kabel- oder Leitungsdurchführung in einer Wand oder Decke, umfassend:
a) Vorsehen einer Kabel- oder Leitungsdurchführung, bei der wenigstens ein Kabel oder eine Leitung durch eine Öffnung in der Wand oder Decke hindurchgeführt ist, Auffädeln des Ringkörpers (26) auf das wenigstens eine Kabel oder die wenigstens eine Leitung, so dass das wenigstens eine Kabel oder die wenigstens eine Leitung die Durchgangsöffnung (28) passieren, und Fixieren des Ringkörpers (26) durch Befestigen des Gehäuses (12) mittels der Befestigungseinrichtung (38) außenliegend an einer Berandung der Öffnung, oder
b) Vorsehen einer Öffnung in einer Wand oder Decke für eine Kabel- oder Leitungsdurchführen, Befestigen der Brandschutzmanschette mittels der Befestigungseinrichtung an einer Berandung der Öffnung außenliegend an der Wand oder Decke, um die Öffnung rauchdicht zu verschließen, nachträgliches Hindurchführen wenigstens eines Kabels oder einer Leitung durch die Öffnung, wobei das Kabel oder die Leitung durch die Durchgangsöffnung des Ringkörpers geführt wird.

## Claims

1. Fire protection sleeve (10) for external fastening to a ceiling or wall for sealing off cable or line passages, having a housing (12), a fastening device (38) for fastening the housing (12) in the region of a border of the cable or line passage externally on the ceiling or wall, and a fire protection insert (14) in the housing (12), the fire protection insert (14) having a resiliently deformable molded body (22) made of an elastic first material (24) with intumescent properties, **characterized in that** the molded body (22) in the as-delivered state is an annular body (26) formed around a passage opening (28) formed for the passage of at least one cable or line, and that the passage opening (28) in the as-delivered state is filled by a filling (30) formed of a second material (32) formed differently from the first material (24) of the molded body (22), so that the filling can be removed from the passage opening (28) without tools due to the interfaces between the different materials (24, 32).

2. Fire protection sleeve (10) according to claim 1,
**characterized in**
**that** the passage opening (28) is provided centrally or eccentrically in the annular body (26).

3. Fire protection sleeve (10) according to any of the preceding claims, **characterized in that**
the second material (32) is selected from a group of materials comprising mineral wool, glass wool, rock wool, mineral fiber material, insulating material and/or inelastic material as well as combinations of the aforementioned materials.

4. Fire protection sleeve (10) according to any of the preceding claims, **characterized in that**
the fire protection insert (14) has at least a first and a second molded body (22a, 22b), which are formed in the shape of annular discs with overlapping passage openings (28).

5. Fire protection sleeve (10) according to claim 4,
**characterized in that**
the first and second molded bodies (22a, 22b) are designed to completely overlap one another.

6. Fire protection sleeve (10) according to claim 4 or 5,
**characterized in**
**that** between the first and the second molded body (22a, 22b) at least one annular disc plate made of a fire protection material (46) which foams up or cools in case of fire and which is different from the first material (24) is embedded.

7. Fire protection sleeve (10) according to claim 6,
**characterized in that**
7.1 the annular disc plate extends over the entire radial extent of the first and/or the second molded body (22a, 22b); and/or
7.2 the annular disc plate is cast in between the first and second molded bodies (22a, 22b); and/or
7.3 the fire protection material (46) is selected from a group of materials comprising insulating layer forming materials, mineral board fiber material and/or gypsum insulation board material.

8. Fire protection sleeve (10) according to any of the preceding claims, **characterized in that**
8.1 the housing (12) is an annular housing; and/or
8.2 the housing (12) has a circumferential wall; and/or
8.3 the housing (12) is formed of a sheet material; and/or
8.4 the fastening device (38) has receiving grooves (50) formed by indentations (48) on a wall of the housing for each respective shank (52) of a fastening element (54);
8.5 the housing (12) has stop lugs (18) at a front face which project inwards from a wall and engage around an edge of the molded body (22); and/or
8.6 the fastening device (38) has receiving openings (60) in stop lugs (18) which project inwards from a wall at a front face and engage around an edge of the molded body (22); and/or
8.7 the fastening device (38) comprises a base element (62) which can be fastened to the edge of the cable or line passage and a connecting device (66) for connecting a wall of the housing (12) to the base element (62); and/or
8.8 the fastening device (38) comprises a bayonet catch (70) for connecting a wall of the housing (12) to a separately fastenable base element (62); and/or
8.9 the housing is annularly formed with a closure for passing the housing around a cable or line with the closure open and for fixing the fire protection sleeve with the closure closed.

9. Method for producing a fire sleeve (10) for external attachment to a ceiling or wall to seal off cable or line passages, the fire sleeve (10) having a housing (12) and a fire protection insert (14), the method comprising:
a) providing a wall formed from a sheet material to form the housing (12); and
b) forming a molded body (22) from an intumescent elastic first material (24) while foaming or casting the material in a mold,
wherein step b) comprises the step of:
b1) forming a passage opening (28) in the molded body (22) by means of a mold insert forming the passage opening (28) in the mold.

10. Method according to claim 9,
**characterized in that**
in step b1) a filling (30) of a second material different from the first material (24) is used as mold insert.

11. Method according to any of claims 9 or 10,
**characterized in that**
step b) comprises:
b2) embedding at least one annular disc plate of a fire protection material (46) different from the first material (24) to divide the mold into at least a first annular disc region and a second annular disc region; and
b3) forming a first molded body (22a) in the first annular disc region and a second molded body (22b) in the second annular disc region.

12. Method according to claim 11,
**characterized in that**
12.1 one or more materials selected from the group of materials comprising insulating layer forming materials, mineral fiber board material and/or gypsum insulation board material are used as the fire protection material (46);
and/or
12.2 the at least one annular disc plate remains embedded in the fire protection insert (14) between the first molded body (22a) and the second molded body (22b).

13. Use of a fire protection sleeve (10) according to any one of claims 1 to 8 to seal off a cable or line passage in a wall or ceiling, comprising:
a) providing a cable or line passage with at least one cable or line passing through a wall or ceiling, threading the annular body (26) onto the at least one cable or line so that the at least one cable or line passe through the passage opening (28), and fixing the annular body (26) by fastening the housing (12) externally to a rim of the opening by means of the fastening means (38), or
b) providing an opening in a wall or ceiling for a cable or line passage, fastening the fire protection sleeve to a boundary of the opening externally on the wall or ceiling by means of the fastening device in order to close the opening in a smoke-tight manner, subsequently passing at least one cable or line through the opening, the cable or line being passed through the passage opening of the annular body.

## Revendications

1. Manchette de protection contre l'incendie (10) destiné à être fixé à l'extérieur d'un plafond ou d'une paroi pour isoler des passages de câbles ou de lignes, comprenant un boîtier (12), un dispositif de fixation (38) pour fixer le boîtier (12) dans la zone d'un bord du passage de câble ou de ligne à l'extérieur du plafond ou de la paroi, et un insert de protection contre l'incendie (14) dans le boîtier (12), l'insert de protection contre l'incendie (14) présentant un corps moulé (22) déformable de manière élastique en un premier matériau élastique (24) ayant des propriétés intumescentes, **caractérisée en ce que**
le corps moulé (22) à l'état de livraison est un corps annulaire (26) formé autour d'une ouverture de passage (28) formée pour le passage d'au moins un câble ou une ligne et **en ce que** l'ouverture de passage (28) à l'état de livraison est remplie par un remplissage (30) qui est formé d'un deuxième matériau (32) formé différemment du premier matériau (24) du corps moulé (22), de sorte que le remplissage peut être retiré de l'ouverture de passage (28) sans outils en raison des interfaces entre les différents matériaux (24, 32).

2. Manchette de protection contre l'incendie (10) selon la revendication 1, **caractérisée en ce que**
l'ouverture de passage (28) est prévue de manière centrale ou excentrée dans le corps annulaire (26).

3. Manchette de protection contre l'incendie (10) selon l'une des revendications précédentes,
**caractérisée en ce que**
le deuxième matériau (32) est choisi dans un groupe de matériaux comprenant la laine minérale, la laine de verre, la laine de roche, le matériau en fibres minérales, le matériau isolant et/ou le matériau inélastique ainsi que des combinaisons des matériaux susmentionnés.

4. Manchette de protection contre l'incendie (10) selon l'une quelconque des revendications précédentes,
**caractérisée en ce que**
l'insert de protection contre l'incendie (14) présente au moins un premier et un deuxième corps moulé (22a, 22b) qui sont formés sous la forme d'un disque annulaire avec des ouvertures de passage se chevauchant (28).

5. Manchette de protection contre l'incendie (10) selon la revendication 4, **caractérisée en ce que**
le premier et le deuxième corps moulé (22a, 22b) sont conçus pour se chevaucher complètement.

6. Manchette de protection contre l'incendie (10) selon la revendication 4 ou 5,
**caractérisée en ce que**
entre le premier et le deuxième corps moulé (22a, 22b) est encastrée au moins une plaque de disque annulaire en un matériau de protection contre l'incendie (46) différent du premier matériau (24), qui mousse ou refroidit en cas d'incendie.

7. Manchette de protection contre l'incendie (10) selon la revendication 6, **caractérisée en ce que**
7.1 la plaque de disque annulaire s'étend sur toute l'étendue radiale du premier et/ou du deuxième corps moulé (22a, 22b); et/ou
7.2 la plaque de disque annulaire est coulée entre le premier et le deuxième corps moulé (22a, 22b); et/ou
7.3 le matériau de protection contre l'incendie (46) est choisi dans un groupe de matériaux comprenant un matériau formant couche isolante, un matériau de fibre de panneau minéral et/ou un matériau de panneau d'isolation en gypse.

8. Manchette de protection contre l'incendie (10) selon l'une quelconque des revendications précédentes,
**caractérisée en ce que**
8.1 le boîtier (12) est un boîtier annulaire; et/ou
8.2 le boîtier (12) a une paroi circonférentielle; et/ou
8.3 le boîtier (12) est formé d'un matériau de tôle; et/ou
8.4 le dispositif de fixation (38) présente des rainures de réception (50) formées par des encoches (48) sur une paroi du boîtier, chacune pour une tige (52) d'un élément de fixation (54);
8.5 le boîtier (12) présente, sur une face frontale, des pattes d'arrêt (18) qui font saillie vers l'intérieur à partir d'une paroi et s'engagent autour d'un bord du corps moulé (22); et/ou
8.6 le dispositif de fixation (38) présente des ouvertures de réception (60) dans des pattes d'arrêt (18) qui font saillie vers l'intérieur à partir d'une paroi sur une face frontale et s'engagent autour d'un bord du corps moulé (22); et/ou
8.7 le dispositif de fixation (38) présente un élément de base (62) qui peut être fixé sur le bord du passage de câble ou de ligne et un dispositif de liaison (66) pour relier une paroi du boîtier (12) à l'élément de base (62);
et/ou
8.8 le dispositif de fixation (38) comprend une fermeture à baïonnette (70) pour relier une paroi du boîtier (12) à un élément de base (62) pouvant être fixé séparément; et/ou
8.9 le boîtier est annulaire avec une fermeture pour faire passer le boîtier autour d'un câble ou d'un conduit lorsque la fermeture est ouverte, et pour fixer la manchette de protection contre l'incendie avec la fermeture fermée.

9. Procédé de fabrication d'une manchette de protection contre l'incendie (10) destiné à être fixé à l'extérieur d'un plafond ou d'une paroi pour isoler des passages de câbles ou de lignes, la manchette de protection contre l'incendie (10) ayant un boîtier (12) et un insert de protection contre l'incendie (14), le procédé comprenant:
a) fournir une paroi formée à partir d'un matériau de tôle pour former le boîtier (12); et
b) former un corps moulé (22) à partir d'un premier matériau élastique (24) ayant des propriétés intumescentes tout en moussant ou en empotant le matériau dans un moule,
l'étape b) comprenant l'étape:
b1) former une ouverture de passage (28) dans le corps moulé (22) au moyen d'un insert de moule formant l'ouverture de passage (28) dans le moule.

10. Procédé selon la revendication 9,
**caractérisé en ce que**
dans l'étape b1), un remplissage (30) d'un deuxième matériau différent du premier matériau (24) est utilisé comme insert de moule.

11. Procédé selon l'une quelconque des revendications 9 ou 10, **caractérisé en ce que**
l'étape b) comprend:
b2) noyer au moins une plaque de disque annulaire d'un matériau coupe-feu (46) différent du premier matériau (24) pour diviser le moule dans au moins une première région de disque annulaire et une deuxième région de disque annulaire; et
b3) former un premier corps moulé (22a) dans la première région de disque annulaire et un second corps moulé (22b) dans la seconde région de disque annulaire.

12. Procédé selon la revendication 11,
**caractérisé en ce que**
12.1 comme matériau coupe-feu (46) on utilise un ou plusieurs matériaux choisis dans le groupe de matériaux comprenant un matériau formant couche isolante, un matériau de panneau de fibres minérales et/ou un matériau de panneau d'isolation en gypse;
et/ou
12.2 que l'au moins une plaque de disque annulaire reste encastrée dans l'insert de protection contre le feu (14) entre le premier corps moulé (22a) et le second corps moulé (22b).

13. Utilisation d'une manchette de protection contre l'incendie (10) selon l'une quelconque des revendications 1 à 8 pour isoler un passage de câble ou de ligne dans une paroi ou un plafond, comprenant:
a) fournir un passage de câble ou de ligne avec au moins un câble ou une ligne passant à travers une paroi ou un plafond, enfiler le corps annulaire (26) sur ledit au moins un câble ou ladite au moins une ligne passant à travers l'ouverture du passage (28) de sorte que ledit au moins un câble ou ladite au moins une ligne passent à travers l'ouverture de passage (28), et fixer le corps annulaire (26) en fixant le boîtier (12) à l'extérieur d'un rebord de l'ouverture à l'aide du moyen de fixation (38), ou
b) prévoir une ouverture dans une paroi ou un plafond pour le passage d'un câble ou d'une ligne, fixer la manchette de protection contre l'incendie au moyen du dispositif de fixation sur un bord de l'ouverture situé à l'extérieur sur la paroi ou le plafond afin de fermer l'ouverture de manière étanche à la fumée, puis faire passer au moins un câble ou une ligne à travers l'ouverture, le câble ou la ligne étant passé à travers l'ouverture de passage du corps annulaire.
